# EUROPÄISCHE PATENTSCHRIFT

(11) **EP 0 900 435 B1**
(45) Veröffentlichungstag und Bekanntmachung des Hinweises auf die Patenterteilung: **14.11.2001**
(21) Anmeldenummer: 97907045.5
(22) Anmeldetag: 27.02.1997
(51) Int. Cl.: G11B 7/085, G11B 7/09, G11B 19/12, G11B 19/02

(54) **GERÄT ZUM BESCHREIBEN UND/ODER LESEN OPTISCHER AUFZEICHNUNGSTRÄGER UNTERSCHIEDLICHEN AUFBAUS**
DEVICE FOR WRITING AND/OR READING OPTICAL RECORDING MEDIUM OF VARIOUS DESIGNS
APPAREIL D'ECRITURE ET/OU DE LECTURE DE SUPPORTS D'ENREGISTREMENT OPTIQUE DE DIFFERENTES CONCEPTIONS

(30) Priorität: 12.03.1996 DE 19609575
(43) Veröffentlichungstag der Anmeldung: 10.03.1999
(60) Teilanmeldung: 01110289.4
(73) Patentinhaber: DEUTSCHE THOMSON-BRANDT GMBH, 78048 Villingen-Schwenningen (DE)
(72) Erfinder: DANG, Lieu, Kim, D-78056 Villingen-Schwenningen (DE); ZUCKER, Friedhelm, D-78052 Villingen-Schwenningen (DE); SCHROEDER, Heinz-Jörg, D-78052 Villingen-Schwenningen (DE)
(74) Vertreter: Thies, Stephan, Dipl.-Phys.
(86) Internationale Anmeldenummer: EP9700943
(87) Internationale Veröffentlichungsnummer: WO9734296

(56) Entgegenhaltungen:
- EP-A- 0 294 490
- EP-A- 0 414 380
- EP-A- 0 610 055
- EP-A- 0 712 122
- EP-A- 0 731 457
- EP-A- 0 767 455
- EP-A- 0 767 456
- US-A- 4 797 869
- US-A- 5 263 011
- PATENT ABSTRACTS OF JAPAN vol. 016, no. 368 (P-1398), 7.August 1992 & JP 04 113556 A (SONY CORP), 15.April 1992,
- ANONYMOUS: "Detection of Optical Disk Type" IBM TECHNICAL DISCLOSURE BULLETIN, Bd. 29, Nr. 3, August 1986, NEW YORK, US, Seiten 995-996, XP002042060
- PATENT ABSTRACTS OF JAPAN vol. 010, no. 338 (P-516), 15.November 1986 & JP 61 139982 A (CANON INC), 27.Juni 1986,
- PATENT ABSTRACTS OF JAPAN vol. 011, no. 147 (P-575), 14.Mai 1987 & JP 61 283035 A (MATSUSHITA ELECTRIC IND CO LTD), 13.Dezember 1986,
- PATENT ABSTRACTS OF JAPAN vol. 095, no. 001, 28.Februar 1995 & JP 06 302095 A (MATSUSHITA ELECTRIC IND CO LTD), 28.Oktober 1994,
- PATENT ABSTRACTS OF JAPAN vol. 017, no. 366 (P-1571), 9.Juli 1993 -& JP 05 054406 A (MATSUSHITA ELECTRIC IND CO LTD), 5.März 1993,
- PATENT ABSTRACTS OF JAPAN vol. 018, no. 028 (P-1676), 17.Januar 1994 & JP 05 258450 A (CLARION CO LTD), 8.Oktober 1993,
- PATENT ABSTRACTS OF JAPAN vol. 013, no. 108 (P-843), 15.März 1989 -& JP 63 285730 A (HITACHI LTD), 22.November 1988,
- PATENT ABSTRACTS OF JAPAN vol. 097, no. 003, 31.März 1997 -& JP 08 287588 A (MATSUSHITA ELECTRIC IND CO LTD), 1.November 1996,
- PATENT ABSTRACTS OF JAPAN vol. 097, no. 003, 31.März 1997 -& JP 08 306056 A (SANYO ELECTRIC CO LTD), 22.November 1996,

## Beschreibung

Die vorliegende Erfindung befaßt sich mit einem Gerät zum Beschreiben und/oder Lesen optischer Aufzeichnungsträger unterschiedlichen Aufbaus.

Ein derartiges Gerät ist beispielsweise aus der EP 0 294 490 oder dem "IBM Technical Disclosure Bulletin, Vol29 Nr. 3, August 1986" bekannt. In diesen Geräten wird die Art des optischen Aufzeichnungsträgers anhand der Reflektivität der Aufzeichnungsschicht bestimmt. Dabei wird die Intensität des reflektierten Lichts mit zwei Referenzwerten verglichen, die eine Unterscheidung (Diskrimination) zwischen zwei Arten von Aufzeichnungsträgern ermöglichen.

In dem aus dem "IBM Technical Disclosure Bulletin, Vol29 Nr. 3, August 1986" bekannten Gerät wird zur Ermittlung der Art des optischen Aufzeichnungsträgers dessen Reflektivität verwendet. Die Objektivlinse des Geräts wird dabei aus einer zurückgesetzten Position auf den Aufzeichnungsträger hin bewegt. Das dabei von einem Fokusdetektor abgegebene Signal wird zur Ermittlung der Art des optischen Aufzeichnungsträgers herangezogen. Vom Signalverlauf werden dabei nur diejenigen Bereiche verwendet, die oberhalb eines ersten Referenzwertes (LOW) liegen. Liegt die Größe des Signals oberhalb des ersten Referenzwertes, aber unterhalb eines zweiten höheren Referenzwert (HIGH), so gibt ein UND-Glied einen Impuls ab, der signalisiert, daß ein "write-once"-Aufzeichnungsträger eingelegt ist. Liegt die Größe des Signals sowohl oberhalb des ersten Referenzwertes, als auch oberhalb des zweiten höheren Referenzwert (HIGH), so gibt ein weiteres UND-Glied einen Impuls ab, der signalisiert, daß ein "read-only"-Aufzeichnungsträger eingelegt ist. Dieses Verfahren funktioniert dann, wenn die zur Verwendung kommenden Aufzeichnungsträger eindeutig anhand der Referenzwerte erkennbar sind. Eine größere Anzahl unterschiedlicher Arten optischer Aufzeichnungsträger erfordert es gegebenenfalls zusätzliche Referenzwerte einzuführen, die zwangsläufig näher beieinander liegen, wodurch die Fehlerwahrscheinlichkeit ansteigt. Treten mehrere Extremwerte im Signalverlauf auf, die zwischen den niedrigsten und dem höchsten Referenzwert liegen, so kann es bei diesem Verfahren dazu führen, daß zu einem einzigen Aufzeichnungsträger mehrere sich widersprechende Aussagen über dessen Art abgegeben werden, was zu einer Fehlfunktion des Gerätes führen kann.

Aus der EP 0 294 490 ist es bekannt, zur Ermittlung der Art des optischen Aufzeichnungsträgers die Signalhöhe des RF-Signals auszuwerten, also des die vom Aufzeichnungsträger gelesenen Informationen tragenden Signals. In diesem Fall ist vorgesehen, die Signalhöhe dann auszuwerten, wenn sich die Objektivlinse in einer zum Lesen geeigneten Position befindet, d.h. ihr Fokuspunkt auf oder nahezu auf der reflektierenden Schicht des Aufzeichnungsträgers liegt. So lange die Art des optischen Aufzeichnungsträgers noch nicht bekannt ist, kann das Gerät nicht optimal eingestellt werden, d. h. das RF-Signal ist mehr oder weniger stark gestört, so daß die Signalhöhe tatsächlich nur während einer sehr kurzen Zeitspanne ausgewertet werden kann. Je nach der Höhe des zufällig gelesenen Signals können hier große Schwankungen auftreten, so daß eine große Fehlerbandbreite einkalkuliert werden muß, d.h. auch hier tritt das Problem auf, daß bei einer in der Zukunft zu erwartenden Vielfalt von unterschiedlichen Arten von optischen Aufzeichnungsträgern unterschiedlicher Dicke und/oder Schichtanzahl die zur Unterscheidung genutzten Signalhöhen so nahe beieinander liegen, daß eine eindeutige Unterscheidung einen immer größeren Aufwand erfordert oder sogar unmöglich wird. Auch kann eine eindeutige Unterscheidung durch herstellungsbedingte geringförmige Schwankungen der Reflektivität des optischen Aufzeichnungsträgers nahezu unmöglich gemacht werden.

Als nachteilig an diesen bekannten Geräten ist also anzusehen, daß die in der Zukunft zu erwartende Vielfalt von unterschiedlichen Arten optischer Aufzeichnungsträger unterschiedlicher Dicke und/oder Schichtanzahl mittels einer einfachen Referenzwertanalyse nach dem Stand der Technik nicht mehr zuverlässig identifiziert werden können.

Insbesondere Geräte, die geeignet sind, verschiedene Arten von optischen Aufzeichnungsträgern zu lesen und/oder zu beschreiben, sollten in der Lage sein, die Art des optischen Aufzeichnungsträgers zu erkennen, um Parameter für den Lese-bzw. Schreibvorgang korrekt wählen zu können.

Aufgabe der vorliegenden Erfindung ist es daher, ein einfach aufgebautes Gerät und eine entsprechende Methode vorzuschlagen, mittels der unterschiedliche Arten von optischen Aufzeichnungsträgern sicher und dennoch schnell identifiziert werden können.

Diese Aufgabe wird durch die in den unabhängigen Ansprüchen angegebenen Maßnahmen vorteilhaft gelöst. Vorteilhafte Weiterbildungen der Erfindung sind in den Unteransprüchen aufgeführt.

Gemäß der vorliegenden Erfindung ist vorgesehen, mehrere charakteristische Merkmale im zeitlichen Verlauf der Intensität des vom optischen Aufzeichnungsträger reflektierten Lichts zur Bestimmung der physikalischen Eigenschaften und damit der Art des optischen Aufzeichnungsträgers auszuwerten, insbesondere mehere Extremwerte miteinander zu vergleichen. Diese Maßnahme beruht auf der Erkenntnis, daß der zeitliche Verlauf der Intensität von der Art des optischen Aufzeichnungsträgers abhängt. Dabei schließt der zeitliche Verlauf auch Reflektionen an der Übergangsschicht Luft-Trägermaterial oder an den Übergangsschichten verschiedener Schichten des optischen Aufzeichnungsträgers mit ein, so daß eine größere Anzahl von Informationen zur Auswertung bereitstehen. Der zeitliche Verlauf der Intensität des reflektierten Lichtes unterscheidet sich beispielsweise für unterschiedlich dicke optische Aufzeichnungsträger. Beidseitig bespielte bzw. bespielbare optische Aufzeichnungsträger haben pro Seite nur etwa die halbe Dicke eines herkömmlichen optischen Aufzeichnungsträgers, beispielsweise einer Audio-CD. Es lassen sich ebenfalls unterschiedliche optische Eigenschaften, z.B. unterschiedliche Brechungsindizes des Trägermaterials des optischen Aufzeichnungsträgers und unterschiedliche Reflektivitäten der verwendeten optischen Aufzeichnungsschichten, insbesondere wenn zwei oder mehrere Lagen Aufzeichnungsschichten übereinander angeordnet sind, leicht unterscheiden. Im Gegensatz zum Stand der Technik, bei dem ein mit zwei Aufzeichnungsschichten versehener Aufzeichnungsträger lediglich anhand der Schicht mit der höchsten Reflektivität bestimmt wird, was leicht zu einer Falschzuordnung führen kann, sind derartige Fehler mit dem erfindungsgemäßen Gerät nahezu ausgeschlossen. Das vom optischen Aufzeichnungsträger reflektierte Licht wird dabei von Detektionsmitteln detektiert. Im einfachsten Fall bestehen die Detektionsmittel aus einem Photodetektor, der ein elektrisches, der Intensität des auf ihn fallenden Lichts proportionales Signal abgibt. In einer vorteilhaften Weiterbildung ist den Detektionsmitteln eine Verarbeitungsstufe zugeordnet, in der das Signal des Photodetektors verarbeitet und/oder aufbereitet wird.

Erfindungsgemäß ist es somit möglich, die Art des optischen Aufzeichnungsträgers zu ermitteln. Dies hat den Vorteil, daß die für unterschiedliche Arten von optischen Aufzeichnungsträgern unterschiedlichen Abtast- bzw. Aufzeichnungseigenschaften des Geräts automatisch der ermittelten Art des Aufzeichnungsträgers entsprechend eingestellt werden.

Erfindungsgemäß können weiterhin die zeitlichen Abstände zwischen den Extremwerten der abgegebenen Signale bestimmt werden. Dies hat den Vorteil, daß sich so auf einfache Weise die Schichtdicke oder der Abstand mehrerer vorhandener Schichten voneinander ermitteln läßt. Eine noch größere Genauigkeit der Zuordnung der Art des optischen Aufzeichnungsträgers läßt sich erzielen, wenn zusätzlich die Größe der Extremwerte der abgegebenen Signale ausgewertet wird. Dabei ist es möglich, lediglich die Reihenfolge und die Größe der Extremwerte zu bestimmen oder auch zusätzlich den zeitlichen Abstand zu berücksichtigen. Die Größe der Extremwerte, die sowohl Maxima als auch Minima sein können, entspricht der Reflektivität der entsprechenden Aufzeichnungsschicht. Ein Vergleich der relativen oder auch der absoluten Größen der Extremwerte ermöglicht eine sichere Identifizierung der unterschiedlichen Arten von optischen Aufzeichnungsträgern.

Erfindungsgemäß besteht weiterhin die Möglichkeit, den zeitlichen Verlauf der Intensität des reflektierten Signals mit gespeicherten, für die unterschiedlichen Arten von optischen Aufzeichnungsträgern charakteristischen Signalverläufen zu vergleichen. Jedem der gespeicherten charakteristischen Signalverläufe ist die entsprechende Art des optischen Aufzeichnungsträgers zugeordnet, so daß anhand dieses Vergleichs die Art des Aufzeichnungsträgers ermittelt wird. Dabei erfolgt der Vergleich entweder direkt oder mittels eines geeigneten mathematischen Algorithmus.

Erfindungsgemäß können insbesondere die während des Verschiebens des Fokuspunkts entlang der optischen Achse abgegebenen Signale ausgewertet werden. Dies hat den Vorteil, daß dies eine einfache, keinen zusätzlichen Schaltungs- und Zeitaufwand erfordernde Maßnahme darstellt, da der Fokuspunkt ohnehin auf den optischen Aufzeichnungsträger hin bewegt werden muß, um dessen korrekte Lage bezogen auf den Aufzeichnungsträger zu finden.

In einer vorteilhaften Weiterbildung der Erfindung weist das Fokussiermittel eine Mehrfach-Fokuslinse, insbesondere eine Doppel-Fokuslinse auf, wie sie für unterschiedlich dicke, die optische Aufzeichnungsschicht bedeckende Schutzschichten vorgesehen ist. Dadurch erhält man eine größere Anzahl von Extremwerten im zeitlichen Verlauf des reflektierten Signals. Dies hat den Vorteil, daß eine noch genauere Differenzierung dieses Signals möglich ist. Die genannten Doppel-Fokuslinsen haben zwei verschieden große Brennweiten bzw. lassen sich auf zwei verschieden große Brennweiten einstellen, um optisch auf zwei unterschiedlich dicke Schichten angepaßt zu sein. Eine optische Anpassung auf mehr als zwei unterschiedliche Schichten wird durch eine entsprechende Mehrfach-Fokuslinse erzielt. Es liegt im Rahmen der Erfindung, statt einer Linse andere geeignete optische Elemente zu verwenden, die mehrere Fokuspunkte zu erzeugen in der Lage sind, wie beispielsweise holographische optische Elemente oder Polarisatoren.

Die Einstellungen der erfindungsgemäßen Geräte werden vorteilhafterweise mittels des in dem Verfahrensanspruch angegebenen Verfahrens abgeändert, um optimal auf die Art des Aufzeichnungsträgers angepaßt zu sein.

Nachfolgend wird die Erfindung in Ausführungsbeispielen anhand der Abbildungen beschrieben. Vorteilhafte Weiterbildungen der Erfindung können der Beschreibung entnommen werden.

**Dabei zeigen:**
- **Fig. 1**: eine Prinzipskizze eines erfindungsgemäßen Gerätes,
- **Fig. 2**: eine schematische Darstellung der Ermittlung der Art des optischen Aufzeichnungsträgers mittels einer Doppel-Fokuslinse anhand einer herkömmlichen CD,
- **Fig. 3**: eine schematische Darstellung der Ermittlung der Art des optischen Aufzeichnungsträgers mittels einer Doppel-Fokuslinse anhand eines beidseitig bespielbaren bzw. bespielten optischen Aufzeichnungsträgers hoher Speicherdichte mit einer einzigen Aufzeichnungsschicht und
- **Fig. 4**: eine schematische Darstellung der Ermittlung der Art des optischen Aufzeichnungsträgers mittels einer Doppel-Fokuslinse anhand eines beidseitig bespielbaren bzw. bespielten optischen Aufzeichnungsträgers hoher Speicherdichte mit zwei Aufzeichnungsschichten.

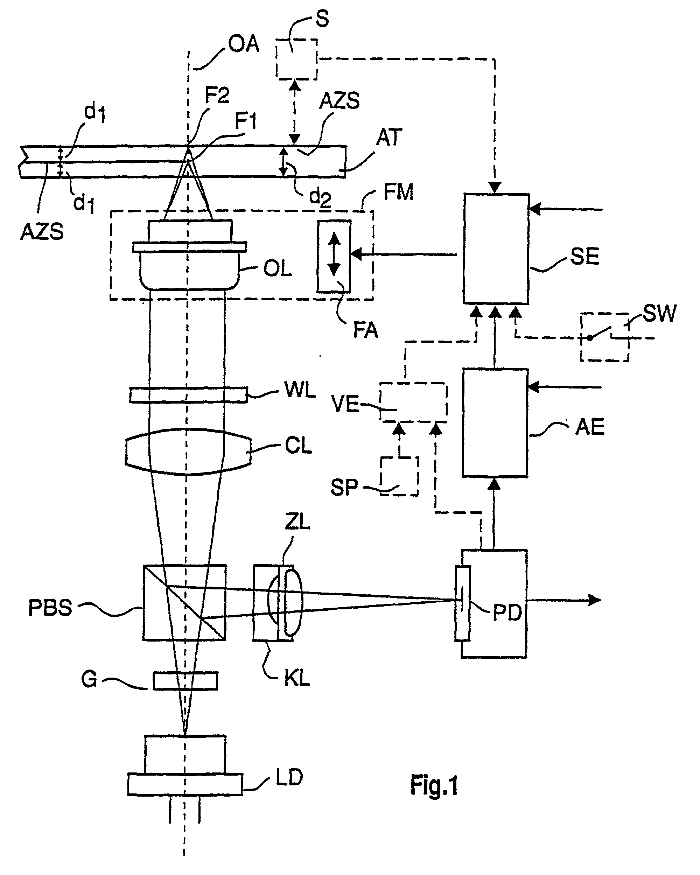

Gemäß der in Fig.1 dargestellten Prinzipskizze eines Wiedergabeund/oder Aufzeichnungsgerätes für optische Aufzeichnungsträger AT unterschiedlicher Speicherdichte ist in einem Wiedergabe-und/oder Aufzeichnungsgerät, das sowohl zum Abspielen von AudioCDs als auch zum Abspielen von digitalen Video-Discs vorgesehen ist, eine Abtasteinrichtung verwendet, die Fig.1 entsprechend aus einer Laserdiode LD, einem Gitter G, einem Polarisationsstrahlteiler PBS, einer Collimatorlinse CL, einer Viertelwellenlängeplatte WL, einer Objektivlinse OL, einer Konkavlinse KL, einer Zylinderlinse ZL und einem Detektor PD besteht. Obwohl die digitale Video-Disc, nachfolgend DVD und eine Audio-Disc, nachfolgend CD genannt, eine unterschiedliche Speicherdichte aufweisen, kann die in Fig.1 dargestellte Abtasteinheit für beide Arten von Aufzeichnungsträgern AT gleichermaßen verwendet werden. Die höhere Speicherdichte bei einer DVD wird durch eine geringere Pitgröße und einem verringerten Spurabstand im Vergleich zur CD erreicht. Um die auf einem Aufzeichnungsträger AT gespeicherten Informationen wiederzugeben oder entsprechende Informationen aufzuzeichnen ist es erforderlich, den Durchmesser des Abtaststrahls bzw. Schreibstrahls an die Größe der verwendeten Speicherelemente bzw. Pits anzupassen. Damit sowohl die kleineren Pits einer DVD als auch die größeren Pits einer CD mit der in Fig.1 angegebenen Abtasteinrichtung gelesen werden können, ist die Objektivlinse OL als Doppelfokuslinse ausgebildet. Mit der Doppelfokuslinse oder auch einer Mehrfachfokuslinse können unterschiedliche Lichtfleckdurchmesser auf dem Informationsträger AT realisiert werden. Diese Detektoranordnung wird in vorteilhafter Weise sowohl für Aufzeichnungsträger AT hoher Speicherdichte als auch geringer Speicherdichte verwendet.

Ausgangssignale der Detektionsmittel PD werden sowohl zur Auswertung an hier nicht dargestellte, bekannte Auswerte- und Regeleinrichtungen weitergegeben als auch an die Auswerteeinheit AE, die zusätzliche Informationen aus hier ebenfalls nicht dargestellten Baugruppen erhalten kann. Ein Ausgangssignal der Auswerteeinheit AE wird an eine Steuerungseinheit SE weitergegeben, welche in Abhängigkeit von Signalen weiterer hier nicht dargestellter Baugruppen, wie z.B. einer Regeleinrichtung, einen Fokusantrieb FA steuert. Dieser ist Teil der Fokussierungsmittel FM und dient im Ausführungsbeispiel dazu, die Objektivlinse OL entlang der optischen Achse OA zu verschieben. Im allgemeineren Fall wird der Fokuspunkt entlang der optischen Achse OA verschoben. Der Aufzeichnungsträger AT ist mit zwei verschiedenen Schichtdicken d1 und d2 dargestellt. Die rechts der optischen Achse OA dargestellte Schichtdicke d2 entspricht derjenigen einer herkömmlichen CD. Der alternativ auf der linken Seite der optischen Achse OA dargestellte Aufzeichnungsträger weist zwei Schichten der Dicke d1 auf. Es handelt sich hier um ein Beispiel einer beidseitig bespielten bzw. bespielbaren digitalen Videodisc DVD. Man erkennt weiterhin die zwei Fokuspunkte F1 und F2, der hier als Doppel-Fokuslinse ausgebildeten Objektivlinse OL. Die Schichtdicke d1, d2 ist, wie hier am Beispiel der CD und der DVD dargestellt, ein Kennzeichen für die Art des optischen Aufzeichnungsträgers.

Das dargestellte Gerät zum Abspielen bzw. Aufzeichnen des optischen Aufzeichnungsträgers AT ist in der Lage, zwischen den verschiedenen Arten von optischen Aufzeichnungsträgern, wie beispielsweise CD und DVD zu unterscheiden, damit die Steuereinheit SE den Fokusantrieb FA mit für die entsprechende Art des Aufzeichnungsträgers AT angepaßten Steuersignalen ansteuern kann.

Im einfachsten Fall ist dabei anstatt der Auswertungseinheit AE ein in Fig. 1 gestrichelt dargestellter, vom Benutzer des Geräts betätigbarer Sensor oder mechanischen Schalter SW oder ein ebenfalls gestrichelt dargestellter, die Art des Aufzeichnungsträgers AT detektierender Sensor S angeordnet.

Verzichtet man auf mechanische Schalter, so muß auf andere Weise ein Signal generiert werden, mittels dessen die physikalischen Eigenschaften des zu lesenden bzw. des zu beschreibenden optischen Aufzeichnungsträgers AT identifiziert werden können, damit die Steuereinheit SE entsprechend eingestellt werden kann.

Dieses Problem tritt auf, wenn konventionelle CDs in einem Gerät zum Lesen bzw. Beschreiben digitaler Videodiscs DVD gelesen oder beschrieben werden sollen. Um trotz der Schichtdicken-Unterschiede d1, d2 der unterschiedlichen Arten von optischen Aufzeichnungsträgern mittels einer relativ einfach aufgebauten Ausleseeinheit auszukommen, wird eine Doppel-Fokuslinse OL verwendet. Dabei resultiert jeder der beiden Fokuspunkte F1, F2 in einem von dem Aufzeichnungsträger reflektierten Lichtsignal. Lediglich eines der beiden Signale enthält die gespeicherte Information. Da die Spurbreite bei DVD und CD unterschiedlich ist, muß auch der Spurnachführungsregelkreis an die Art des optischen Aufzeichnungsträgers angepaßt sein.

Die zu lesenden bzw. zu beschreibenden optischen Aufzeichnungsträger können Höhen- bzw. Abstandsabweichungen vom Fokussierungsmittel FM von bis zu mehreren Millimetern aufweisen, während der Fokuspunkt F1 bzw. F2 lediglich um wenige Mikrometer bezüglich der sich im Abstand d1 bzw. d2 von der Unterseite des optischen Aufzeichnungsträgers AT befindlichen Aufzeichnungsschicht AZS wegbewegen darf. Dazu wird im Ausführungsbeispiel ein automatisches Fokussiersystem verwendet, welches den Abstand der Objektivlinse OL von der Aufzeichnungsschicht AZS mithilfe des Fokusantriebs FA regelt. Die Signale zur Steuerung des Fokusantriebs FA werden von Signalen abgeleitet, die der Photodetektor PD abgibt, das heißt parallel zum Auslesen der Information. Zum Fokussieren kann beispielsweise die sogenannte Astigmatismusmethode benutzt werden.

Nach dem Einlegen eines optischen Aufzeichnungsträgers in das Gerät bringt die Steuerungseinheit SE zunächst den Abstand der Objektivlinse OL zum Aufzeichnungsträger AT in eine Position, in der sich der Fokuspunkt auf oder in der Nähe der Aufzeichnungsschicht AZS des optischen Aufzeichnungsträgers befindet, so daß der automatische Regelkreis, dessen Regelbereich begrenzt ist, eingeschaltet werden kann. Der Arbeitsbereich der Fokusregelung liegt üblicherweise im Bereich von 10 bis 100 Mikrometern, abhängig von der verwendeten Fokussiermethode.

Üblicherweise wird in einer Initialisierungsphase nach Einlegen des optischen Aufzeichnungsträgers AT in das Gerät die Objektivlinse OL mit niedriger Geschwindigkeit in Richtung des Aufzeichnungsträgers AT bewegt. Bei einem System mit herkömmlicher Linse, das heißt einem einzigen Brennpunkt und somit einem einzigen Fokuspunkt, tritt dabei ein schmales, impulsartiges Signal auf, wenn der Fokuspunkt der Objektivlinse OL sich in den Aufzeichnungsträger AT hineinbewegt und ein weiterer wesentlich größerer Impuls tritt auf, wenn der Fokuspunkt F2 die Aufzeichnungsschicht AZS trifft. So lange der Fokuspunkt sich nicht in der Nähe entweder der Oberfläche oder der Aufzeichnungsschicht AZS befindet, fällt nahezu kein reflektiertes Licht auf den Detektor PD. Befindet sich der Fokuspunkt dicht unterhalb einer reflektierenden Fläche, so wird aus den vom Detektor PD abgegebenen Signalen beispielsweise ein positives Fokusfehlersignal FE erzeugt, während dieses Signal negativ ist, sobald sich der Fokuspunkt oberhalb der reflektierenden Fläche befindet. Der Wert des Fokusfehlersignals FE ist dann Null, wenn der Fokuspunkt in einer zum Schreiben bzw. Lesen geeigneten Position befindet. Üblicherweise wird der Fokusregelkreis eingeschaltet, sobald das Fokusfehlersignal FE = 0 ist.

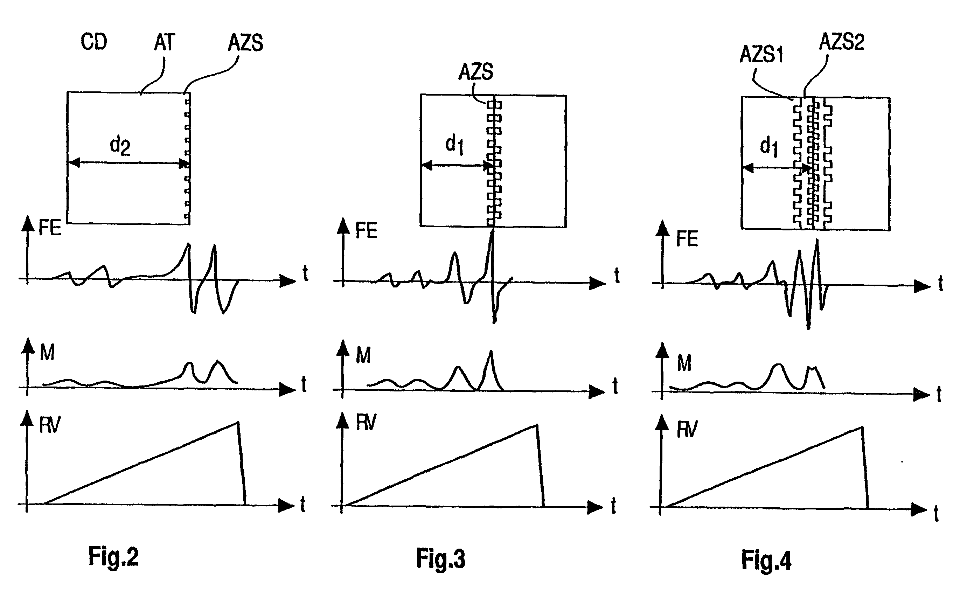

Wird, wie im Ausführungsbeispiel dargestellt, eine Doppel-Fokuslinse OL verwendet, so verdoppelt sich die Anzahl der von der Detektoreinheit während des Initialisierens gemessenen Impulse. Es treten jeweils zwei Impulse für den Durchgang der Fokuspunkte F1 bzw. F2 durch die Grenzschicht Luft-Aufzeichnungsträger sowie die Aufzeichnungsschicht AZS auf. Dieser Fall ist in Fig. 2 anhand einer herkömmlichen CD dargestellt.

Im oberen Teil der Figur 2 ist ein Ausschnitt eines im Vergleich zur Figur 1 um 90° gedrehten Aufzeichnungsträgers AT, hier eine CD, dargestellt. Die Aufzeichnungsschicht AZS befindet sich auf der rechten Seite, die aufgezeichnete Information wird durch die Erhebungen bzw. Vertiefungen in der Aufzeichnungsschicht AZS dargestellt. Im unteren Teil der Figur 2 ist die Zeitachse t dargestellt sowie die Spannung RV, die von der Steuereinheit SE während der bereits weiter oben beschriebenen Initialisierungsphase an den Fokusantrieb FA abgegeben wird. Die steigende Spannung RV bewirkt, daß sich die Objektivlinse OL auf den Aufzeichnungsträger AT zu bewegt. Die von der Detektoreinheit PD abgegebenen Signale sind als Fokusfehlersignal FE und als Mirrorsignal M ebenfalls dargestellt. Das Mirrorsignal M entspricht dabei der mittleren Intensität des von dem optischen Aufzeichnungsträger reflektierten Lichts. Dies kann beispielsweise die Einhüllende des Informationssignals sein.

Für das Ausführungsbeispiel wird angenommen, daß die Doppel-Fokuslinse derart ausgelegt ist, daß die im Fokuspunkt F2 meßbare Intensität etwa halb so groß ist wie diejenige, die im zum Auslesen der digitalen Videodisc DVD vorgesehenen Fokuspunkt F1 meßbar ist. Der Teil der Doppelfokuslinse OL, der den Fokuspunkt F2 erzeugt, ist auf eine Schichtdicke des Aufzeichnungsträgers AT von d2 = 1,2 mm sphärisch korrigiert, während derjenige Teil der Doppelfokuslinse OL, der den Fokuspunkt F1 erzeugt auf eine Schichtdicke von d1 = 0,6 mm korrigiert ist, entsprechend den Schichtdicken von CD bzw. DVD. Wie in Figur 2 dargestellt, treten für eine CD vier Impulse, nachfolgend auch als Peak bezeichnet, auf, während die Objektivlinse OL auf den Aufzeichnungsträger hinbewegt wird. Dabei sind die Peaks des Mirrorsignals M dann am größten, wenn das Fokusfehlersignal FE einen vom positiven in den negativen Bereich gerichteten Null-Durchgang durchläuft. Der erste Peak tritt auf, wenn der CD-Fokuspunkt F2 die Oberfläche des Aufzeichnungsträgers passiert. Die Intensität des hierbei reflektierten Lichts ist gering, da die Reflektivität der Oberfläche gering ist, üblicherweise ca. 4%, und der Fokuspunkt große Abberationen aufweist. Das Mirrorsignal M ist daher niedrig. Der zweite Peak tritt auf, wenn der DVD-Fokuspunkt F1 die Substratoberfläche passiert. Auch hier ist die Intensität des reflektierten Lichts und daher auch der Peak im Mirrorsignal niedrig. Und zwar zum einen aufgrund der niedrigen Reflektivität der Oberfläche und zum anderen aufgrund der Tatsache, daß die sphärische Abberation für den Fokuspunkt F2 sogar noch höher liegt als für den Fokuspunkt F1, was in der höheren numerischen Apertur begründet liegt. Der dritte Peak tritt auf, wenn der CD-Fokuspunkt F2 die Aufzeichnungsschicht AZS erreicht. Die Intensität des hierbei reflektierten Lichts ist hoch, da sowohl die Reflektivität der Aufzeichnungsschicht AZS sehr hoch ist, üblicherweise mindestens 70% für herkömmliche CDs, und zum anderen nur geringe Abberationen auftreten. Der entsprechende Peak ist daher ebenfalls hoch. Der vierte Peak tritt auf, wenn der DVD-Fokus F1 die Aufzeichnungsschicht trifft. Obwohl die Intensität des im Fokuspunkt F1 gebündelten Lichts etwa doppelt so groß ist wie diejenige des im Fokuspunkt F2 gebündelten Lichts, entsprechend der Annahme für dieses Ausführungsbeispiel, ist die Intensität des hier reflektierten Lichts aufgrund der hohen Abberationen etwa so groß wie diejenige im Fokuspunkt F1.

In Figur 3 sind eine schematische Schnittansicht sowie die entsprechenden Signalverläufe für eine digitale Videodisc DVD mit halber Schichtdicke d1 dargestellt. Auch hier treten vier Peaks im Mirrorsignal M auf. Der erste Peak tritt auf, wenn der CD-Fokuspunkt F2 die Oberfläche des Aufzeichnungsträgers passiert. Er ist niedrig aufgrund der geringen Reflektivität und der großen Abberation. Entsprechendes gilt für den zweiten Peak, der auftritt, wenn der Fokuspunkt F1 die Substratoberfläche passiert. Der dritte Peak entsteht, wenn der Fokuspunkt F2 die Aufzeichnungsschicht trifft. Die Intensität dieses Peaks ist größer als diejenigen der ersten beiden, aber dennoch relativ niedrig aufgrund hoher Abberationen des auf eine Schichttiefe d2 korrigierten, den Fokus F2 erzeugenden Teils der Doppelfokuslinse OL. Der vierte Peak tritt auf, wenn der Fokuspunkt F1 die Aufzeichnungsschicht trifft. Da der diesen Fokuspunkt erzeugende Teil der Doppelfokuslinse OL auf die Schichtdicke d1 korrigiert ist und im Fokuspunkt F1 die doppelte Intensität im Vergleich zum Fokuspunkt F2 auftritt, ist der vierte Peak etwa doppelt so hoch wie der dritte Peak.

Fig. 4 zeigt die Signalverläufe und eine Schnittansicht für eine digitale Videodisc mit zwei übereinanderliegenden Aufzeichnungsschichten AZS. Die beiden ersten Peaks im Mirrorsignal M entsprechen denjenigen, die zu Fig. 2 bzw. Fig. 3 beschrieben sind. Der dritte Peak tritt auf, wenn der CD-Fokuspunkt F2 eine bzw. die beiden Aufzeichnungsschichten trifft. Der Peak im Mirrorsignal ist hier größer als die ersten Peaks, aber dennoch relativ niedrig aufgrund hoher Abberationen. Falls diese Abberationen klein genug sind, d.h. das gesamte optische System, insbesondere die Doppelfokuslinse OL, entsprechend gut korrigiert ist, kann man zwei Peaks unterscheiden. Im Allgemeinfall werden sich diese Peaks aber derart überlagern, daß man lediglich einen verbreiterten Peak, wie in Fig. 4 dargestellt, erkennen kann. Wenn der DVD-Fokuspunkt F1 die erste Aufzeichnungsschicht AZS1 trifft, entsteht der vierte Peak im Mirrorsignal M. Da die Doppelfokuslinse OL für den Fokuspunkt F1 in Kombination mit der Substratdicke d1 die niedrigsten Abberationen aufweist und im Fokuspunkt F1 die doppelte Intensität im Vergleich zum Fokuspunkt F2 auftritt, die Reflektivität der ersten Aufzeichnungsschicht AZS1 aber lediglich im Bereich von 30% liegt, ist die Intensität des hier reflektierten Lichts und damit die Höhe dieses Peaks in etwa so hoch wie diejenige des dritten Peaks. Ein zusätzlicher fünfter Peak im Mirrorsignal tritt auf, wenn der Fokuspunkt F1 die zweite Aufzeichnungsschicht AZS2 trifft. Die Intensität dieses Peaks liegt in etwa in der Größenordnung der vorhergehenden. Obwohl sich der vierte und der fünfte Peak überlagern, sind sie dennoch getrennt im Mirrorsignal zu erkennen. Noch deutlicher fällt die Unterscheidung im Fokuserrorsignal FE aus.

Erfindungsgemäß ist vorgesehen, während des Heranfahrens der Objektivlinse OL an den Aufzeichnungsträger AT, die Intensität eines jeden Peaks im Mirrorsignal M zu messen. Dabei wird die Intensität zum Zeitpunkt des Positiv-Negativ-Durchgangs des Fokuserrorsignals FE genommen. Aus dem zeitlichen Verlauf und/oder der Höhenverteilung der Peaks wird die Art des optischen Aufzeichnungsträgers ermittelt. Für den Prozeß der Entscheidungsfindung werden verschiedene Eigenschaften des optischen Aufzeichnungsträgers berücksichtigt, wie Reflektivität der entsprechenden reflektierenden Fläche, reduzierte Intensitätsmodulation durch sphärische Abberation, Zeitverlauf und ähnliches.

In einer idealisierten Betrachtungsweise des Ausführungsbeispiels kann die Geschwindigkeit der Objektivlinse OL aus der Zeitdifferenz der beiden ersten Peaks sowie dem bekannten Abstand der Fokuspunkte F1 und F2 voneinander bestimmt werden. Aus der Geschwindigkeitsinformation und der Zeit, die zwischen dem Auftreten des zweiten und des dritten Peaks vergeht, kann auf die Schichtdicke d1 bzw. d2 geschlossen werden, da diese Zeit proportional ist zur Dicke d1 bzw. d2 dividiert durch die Differenz der beiden Fokuspunkte (d2-d1). Auf diese Weise kann die Schichtdicke d1 bzw. d2 und damit die Art des optischen Aufzeichnungsträgers CD bzw. DVD bestimmt werden.

Wird die Intensitätsverteilung des dritten und vierten bzw. des dritten bis fünften Peaks herangezogen, so handelt es sich um eine herkömmliche CD, wenn der Intensitätsunterschied zwischen dem dritten und dem vierten Peak relativ gering ist. Ist der vierte Peak wesentlich größer als der dritte, so handelt es sich um eine DVD mit einer einzigen Aufzeichnungsschicht AZS. Ist der vierte Peak in einen vierten und fünften Peak aufgespalten, so handelt es sich um eine DVD mit zwei Aufzeichnungsschichten AZS1 und AZS2. Dabei kann auch der dritte Peak bereits eine Aufspaltung aufweisen. Eine mehrfache Aufspaltung des dritten oder vierten Peaks deutet auf eine digitale Videodisc mit einer Mehrzahl von Aufzeichnungsschichten AZS1 bis AZSn hin, wobei n sowohl der Anzahl der Aufzeichnungsschichten als auch der Aufspaltungen entspricht.

Eine weitere Möglichkeit, die Art des optischen Aufzeichnungsträgers zu bestimmen, liegt darin, daß für jede mögliche Art Aufzeichnungsträger der Signalverlauf, z.B. der zeitliche Verlauf des Mirrorsignals M oder des Fokusfehlersignals FE in einer Speichereinheit SP gespeichert sind. Die gespeicherten Signalverläufe werden dann in einer Vergleichseinrichtung VE mit dem aktuell gemessenen Signalverlauf verglichen, die Art des tatsächlich eingelegten optischen Aufzeichnungsträgers wird anhand dieses Vergleichs ermittelt. Dabei können die unterschiedlichsten mathematischen Methoden verwendet werden, um die Zeitskala der gemessenen und der gespeicherten Kurven in Übereinstimmung zu bringen und die größtmögliche Übereinstimmung der Kurven miteinander zu bestimmen. Zur Bestimmung eines Maximums können beispielsweise eine Fourriertransformation und/oder die Konvolutionsintegralmethode verwendet werden.

Ein Verfahren zum Anpassen der Einstellungen eines Geräts zum Beschreiben und/oder Lesen eines optischen Aufzeichnungsträgers AT auf die Art eines optischen Aufzeichnungsträgers AT, besteht aus den Schritten: Verschieben eines Fokuspunkts F1,F2 entlang einer optischen Achse OA und Detektieren des während dieses Vorgangs vom optischen Aufzeichnungsträger AT reflektierten Lichts, Ermitteln der Art des optischer Aufzeichnungsträgers AT anhand charakteristischer Merkmale im zeitlichen Verlauf des reflektierten Lichts und Einstellen der Parameter des Geräts auf für die ermittelte Art des optischen Aufzeichnungsträgers AT geeignete Werte. Dabei werden zur Bestimmung der Art des optischen Aufzeichnungsträgers AT die Abstände der Extremwerte des zeitlichen Verlaufs des reflektierten Lichts bestimmt. Weiterhin ist vorgesehen, zur Bestimmung der Art des optischen Aufzeichnungsträgers AT die relativen und/oder absoluten Werte der Extremwerte des zeitlichen Verlaufs des reflektierten Lichts miteinander zu vergleichen, oder den zeitlichen Verlauf des reflektierten Lichts mit gespeicherten Referenz-Zeitverläufen zu vergleichen.

Es ist weiterhin vorgesehen, das MIRROR-Signal (M) oder das Fokusfehler-Signal (FE) und/oder ein Fokussiermittel FM mit unterschiedlichen Fokuspunkten F1,F2 zur Bestimmung des zeitlichen Verlaufs des reflektierten Lichts zu verwenden.

## Patentansprüche

1. Gerät zum Beschreiben oder Lesen eines optischen Aufzeichnungsträgers (AT) welches aufweist:
Fokussiermittel (FM) zum Verschieben eines Fokuspunkts (F1,F2) entlang einer optischen Achse,
Detektionsmittel (PD) zum Detektieren des vom optischen Aufzeichnungsträger (AT) reflektierten Lichts und
Auswertemittel (AE) zum Unterscheiden der physikalischen Eigenschaften des optischen Aufzeichnungsträgers (AT) durch Auswerten charakteristischer Merkmale im zeitlichen Signalverlauf eines von den Detektionsmitteln (PD) abgegebenen Signals, **dadurch gekennzeichnet,**
**daß** die relativen und/oder absoluten Werte mehrerer Extremwerte des Signals miteinander verglichen werden.

2. Gerät nach Anspruch 1, **dadurch gekennzeichnet, daß** Zeiterfassungsmittel zur Ermittlung mehrerer zeitlicher Abstände zwischen den Extremwerten der abgegebenen Signale oder Größenerfassungsmittel zur Ermittlung der Größe mehrerer Extremwerte der abgegebenen Signale vorhanden sind.

3. Gerät nach Anspruch 2, **dadurch gekennzeichnet, daß** die Aufeinanderfolge der ermittelten Werte ausgewertet wird.

4. Gerät zum Beschreiben oder Lesen eines optischen Aufzeichnungsträgers (AT) welches aufweist:
Fokussiermittel (FM) zum Verschieben eines Fokuspunkts (F1,F2) entlang einer optischen Achse,
Detektionsmittel (PD) zum Detektieren des vom optischen Aufzeichnungsträger (AT) reflektierten Lichts und
Auswertemittel (AE) zum Unterscheiden der physikalischen Eigenschaften des optischen Aufzeichnungsträgers (AT) durch Auswerten charakteristischer Merkmale im zeitlichen Signalverlauf eines von den Detektionsmitteln (PD) abgegebenen Signals, **dadurch gekennzeichnet,**
**daß** mehrere charakteristische Merkmale ausgewertet werden und daß dazu eine Speichereinrichtung (SP) zur Speicherung charakteristischer, von den verschiedenen Arten von optischen Aufzeichnungsträgern (AT) hervorgerufener Signalverläufe der von den Detektionsmitteln (PD) abgegebenen Signale sowie eine Vergleichseinrichtung (VE) vorhanden ist, die den gemessenen Signalverlauf mit den gespeicherten Signalverläufen vergleicht und anhand dieses Vergleichs die entsprechende Art des optischen Aufzeichungsträgers (AT) zuordnet.

5. Gerät nach einem der vorhergehenden Ansprüche, **dadurch gekennzeichnet, daß** die Auswertemittel (AE) die von den Detektionsmitteln (PD) während des Verschiebens des Fokuspunkts (F1,F2) entlang der optischen Achse abgegebenen Signale auswertet.

6. Gerät nach einem der vorhergehenden Ansprüche, **dadurch gekennzeichnet, daß** die Fokussiermittel (FM) eine Mehrfachfokuslinse (OL) aufweisen.

7. Gerät nach einem der vorhergehenden Ansprüche, **dadurch gekennzeichnet, daß** das vom Detektionsmittel (PD) abgegebene Signal ein Fokusfehlersignal (FE) oder ein Mirrorsignal (M) ist.

8. Verfahren zum Ändern der Einstellungen zum Verschieben eines Fokuspunkts (F1,F2) eines Geräts zum Beschreiben oder Lesen eines optischen Aufzeichnungsträgers (AT) entsprechend der physikalischen Eigenschaften des optischen Aufzeichnungsträgers (AT), bestehend aus den folgenden Verfahrensschritten:
- Einlegen des Aufzeichnungsträgers (AT) in das Gerät,
- Verschieben eines Fokuspunkts (F1,F2) entlang einer optischen Achse (OA) entsprechend vorgegebenen, auf einen ersten Typ Aufzeichnungsträger angepaßten Einstellungen des Geräts,
- Detektieren des während dieses Vorgangs vom optischen Aufzeichnungsträger (AT) reflektierten Lichts und Erzeugen eines der Intensität des reflektierten Lichts entsprechenden Signals (FE,M),
- Ermitteln der relativen und/oder absoluten Werte mehrerer Extremwerte des Signals (FE,M),
- Ermitteln der zeitlichen Abstände der Extremwerte des Signals (FE,M),
- Vergleichen der Werte und der relativen Abstände der Extremwerte,
- Ermitteln von für die physikalischen Eigenschaften des eingelegten Aufzeichnungsträgers (AT) geeigneten Einstellungen anhand des Vergleichs,
- Ändern der Einstellungen zum Verschieben des Fokuspunkts (F1,F2) des Geräts entsprechend den ermittelten Einstellungen.

## Claims

1. Device for writing to or reading from an optical recording medium (AT), which has:
focusing means (FM) for shifting a focus point (F1, F2) along an optical axis,
detection means (PD) for detecting the light reflected from the optical recording medium (AT), and
evaluation means (AE) for distinguishing the physical properties of the optical recording medium (AT) by evaluating characteristic features in the time characteristic of a signal emitted by the detection means (PD) **characterized in that** the relative and/or absolute values of a plurality of extreme values of the signal are compared with one another.

2. Device according to Claim 1, **characterized in that** time acquisition means for determining a plurality of time intervals between the extreme values of the emitted signals or magnitude acquisition means for determining the magnitude of a plurality of extreme values of the emitted signals are present.

3. Device according to Claim 2, **characterized in that** the sequence of the determined values is evaluated.

4. Device for writing to or reading from an optical recording medium (AT), which has:
focusing means (FM) for shifting a focus point (F1, F2) along an optical axis,
detection means (PD) for detecting the light reflected from the optical recording medium (AT), and
evaluation means (AE) for distinguishing the physical properties of the optical recording medium (AT) by evaluating characteristic features in the time characteristic of a signal emitted by the detection means (PD) **characterized in that** a plurality of characteristic features are evaluated and **in that**, for this purpose, a memory device (SP) for storing characteristic signal characteristics of the signals emitted by the detection means (PD), which characteristics are caused by the different types of optical recording media (AT), as well as a comparison device (VE) which compares the measured signal characteristic with the stored signal characteristics and, on the basis of this comparison, assigns the corresponding type of optical recording medium (AT) are present.

5. Device according to one of the preceding claims, **characterized in that** the evaluation means (AE) evaluates the signals emitted by the detection means (PD) while the focus point (F1, F2) is being shifted along the optical axis.

6. Device according to one of the preceding claims, **characterized in that** the focusing means (FM) have a multiple-focus lens (OL).

7. Device according to one of the preceding claims, **characterized in that** the signal emitted by the detection means (PD) is a focus error signal (FE) or a mirror signal (M).

8. Method for changing the settings for shifting a focus point (F1, F2) of a device for writing to or reading from an optical recording medium (AT) in accordance with the physical properties of the optical recording medium (AT), comprising the following method steps:
- insertion of the recording medium (AT) into the device,
- shifting of a focus point (F1, F2) along an optical axis (OA) in accordance with predetermined settings, adapted to a first type of recording medium, of the device,
- detection of the light reflected from the optical recording medium (AT) during this operation and generation of a signal (FE, M) which corresponds to the intensity of the reflected light,
- determination of the relative and/or absolute values of a plurality of extreme values of the signal (FE, M),
- determination of the time intervals of the extreme values of the signal (FE, M),
- comparison of the values and the relative intervals of the extreme values,
- determination of settings which are suitable for the physical properties of the inserted recording medium (AT) using the comparison,
- changing the settings for shifting the focus point (F1, F2) of the device in accordance with the settings which have been determined.

## Revendications

1. Appareil d'écriture ou de lecture d'un support d'enregistrement optique (AT) qui possède un dispositif de focalisation (FM) pour le déplacement d'un point focal (F1, F2) le long d'un axe optique, d'un dispositif de détection (PD) pour la détection de la lumière réfléchie par le support d'enregistrement optique (AT) et d'un dispositif d'évaluation (AE) pour la distinction des propriétés physiques du support d'enregistrement optique (AT) via l'évaluation de caractéristiques de la courbe temporelle d'un signal émis par le dispositif de détection (PD), **caractérisé en ce que** les valeurs relatives et/ou absolues de plusieurs valeurs extrêmes du signal sont comparées entre elles.

2. Appareil conforme à la revendication 1, **caractérisé en ce qu'**il présente un dispositif de détection de temps pour l'identification de plusieurs écarts temporels entre les valeurs extrêmes des signaux émis ou un dispositif de détection de taille pour l'identification de la taille de plusieurs valeurs extrêmes des signaux émis.

3. Appareil conforme à la revendication 2, **caractérisé en ce que** la succession des valeurs identifiées est évaluée.

4. Appareil d'écriture ou de lecture d'un support d'enregistrement optique (AT) qui possède un dispositif de focalisation (FM) pour le déplacement d'un point focal (F1, F2) le long d'un axe optique, d'un dispositif de détection (PD) pour la détection de la lumière réfléchie par le support d'enregistrement optique (AT) et d'un dispositif d'évaluation (AE) pour la distinction des propriétés physiques du support d'enregistrement optique (AT) via l'évaluation de caractéristiques de la courbe temporelle d'un signal émis par le dispositif de détection (PD), **caractérisé en ce que** plusieurs caractéristiques sont évaluées et **en ce qu'**un dispositif de mémorisation (SP) est disponible pour la mémorisation des courbes de signal caractéristiques des signaux émis par le dispositif de détection (PD), suscitées par les différents types de supports d'enregistrement optique (AT), de même qu'un dispositif de comparaison (VE), qui compare la courbe de signal mesurée avec les courbes de signal mémorisées et affecte le type de support d'enregistrement optique (AT) correspondant à l'aide de cette comparaison.

5. Appareil conforme à l'une des revendications précédentes, **caractérisé en ce que** le dispositif d'évaluation (AE) évalue les signaux émis par le dispositif de détection (PD) pendant le déplacement du point focal (F1, F2) le long de l'axe optique.

6. Appareil conforme à l'une des revendications précédentes, **caractérisé en ce que** le dispositif de focalisation (FM) possède une lentille multifocale (OL).

7. Appareil conforme à l'une des revendications précédentes, **caractérisé en ce que** le signal émis par le dispositif de détection (PD) est un signal d'erreur de focalisation (FE) ou un signal miroir (M).

8. Procédé de modification des réglages pour le déplacement d'un point focal (F1, F2) d'un appareil, pour l'écriture ou la lecture d'un support d'enregistrement optique (AT) conformément aux propriétés physiques du support d'enregistrement optique (AT), constitué des étapes suivantes :
- Insertion du support d'enregistrement (AT) dans l'appareil.
- Déplacement d'un point focal (F1, F2) le long d'un axe optique (OA) conformément aux réglages prédéfinis de l'appareil, adaptés à un premier type de support d'enregistrement.
- Détection de la lumière réfléchie pendant ce processus par le support d'enregistrement optique (AT) et génération d'un signal (FE, M) correspondant à l'intensité de la lumière réfléchie.
- Identification des valeurs relatives et/ou absolues de plusieurs valeurs extrêmes du signal (FE, M).
- Identification de l'écart temporel entre les valeurs extrêmes du signal (FE, M).
- Comparaison des valeurs et des écarts relatifs des valeurs extrêmes.
- Identification des réglages appropriés pour les propriétés physiques du support d'enregistrement (AT) mis en place, à l'aide de la comparaison.
- Modification des réglages pour le déplacement du point focal (F1, F2) de l'appareil conformément aux réglages identifiés.
